# EUROPEAN PATENT APPLICATION

(11) **EP 1 115 232 A2**
(43) Date of publication of application: **11.07.2001**
(21) Application number: 01850004.1
(22) Date of filing: 05.01.2001
(51) Int. Cl.: H04L 23/02

(54) **Method and apparatus for monopulse operation of an array antenna**

(30) Priority: 06.01.2000 US 478553
(71) Applicant: Lockheed Martin Corporation, King of Prussia, Pennsylvania 19406 (US)
(72) Inventor: Purdy, Daniel Sanford, Newtown, Pennsylvania 189 40 (US); Lier, Erik, Newtown, Pennsylvania 18940 (US); Kautz, Gregory Michael, Burnt Hills, New York 12027 (US)
(74) Representative: Wihlsson, Joakim Per Magnus

(57) **Abstract**

A method for generating at least two mutually skewed antenna beams involves generating the information signal(s) to be transmitted, encoding the signals with mutually orthogonal (separable) codes, and applying the resulting coded signals to an array antenna for transmission. The combined signals are separable at a receiver by decoding with corresponding codes. In one specific embodiment, plural versions of the same signal are generated, each of which is encoded with one of the mutually orthogonal codes. The encoded signals are combined for application to the antenna. In another embodiment, separate beam weights are generated, one set for each beam, and the beam weights are separately encoded. The encoded beam weights are applied to control the beamformer.

## Description

This invention relates to array antennas including phase andor amplitude control, and more particularly to such antennas in which monopulse operation is desired, particularly for array attitude determination.

### Background of the Invention

Monopulse systems are widely used for antennas, especially for the determination of the location of a target without the requirement for sweeping the antenna beam over the region in which the target is located. This is particularly advantageous in the context of a radar system, in which monopulse techniques are used to determine the location of a target with reference to or "within" the antenna beam. If the location of the target is known, monopulse techniques may be used to determine the pointing direction of the antenna as a whole. In a communications context, monopulse applied to a receive antenna can be used to track the location of a transmitting source. Other applications of monopulse include tracking for missile guidance.

Basically, monopulse involves the use of overlapping squinted antenna beams (beams which have noncoincident or skew axes). The amplitude or phase of the signals received from a target will differ as between the two beams, and the beams are summed and differenced to derive information about the angle of the target relative to the antenna boresight (or equivalently the angle of the boresight relative to the known location of a target). The monopulse technique is not applicable to transmit antennas, because the signal produced at the overlap of the squinted beams is a sum signal from which useful information is difficult or impossible to derive by a receiving probe antenna. Thus, monopulse may be easily applied to an antenna, which is capable of both transmission and reception, because the monopulse techniques are applied in the reception mode.

Modern active array antennas may contain unidirectional elements such as amplifiers. Active array antennas using such unidirectional elements may be operable in separate transmit and receive modes, as described, for example, in U.S. Patent 5,017,927, issued May 21, 1991 in the name of Agrawal et al. Some systems, however, such as communication systems in which transmission and reception must occur simultaneously, may have transmit-only active array antennas. In such systems, it may be necessary to determine the pointing direction of the transmit array antenna. This might be the case, for example, in the context of a communication spacecraft including both transmit- and receive-only active arrays.

Allowed U.S. Patent application 08/986,611, filed December 8, 1997 in the name of Kent et al., describes a spacecraft communication system in which the spacecraft transmit antenna attitude is controlled by a closed-loop system in which sequential lobing monopulse is performed by the ground station receiving antenna, and the resulting information is uplinked to the spacecraft to effect the desired control of the transmit antenna.

Improved antenna arrangements are desired.

### Summary of the Invention

In general, a method according to the invention, for generating at least mutually skewed antenna beams (which may be sum and difference beams), includes the steps of generating a signal to be transmitted, which may be a continuous-wave (CW) radio-frequency (RF) signal, and encoding the signal to be transmitted with at least first and second mutually orthogonal codes, to thereby generate at least components of first and second encoded signals. The orthogonal codes may be Hadamard codes. In the general method, the next step is to apply the first and second encoded signals to an array antenna, for transmitting components of at least one sum and one difference beam. These components are separable at a receiver by decoding the received signal with codes corresponding to the first and second mutually orthogonal codes.

In a first specific embodiment of the method, the step of encoding the signal to be transmitted includes the steps of generating plural versions of the signal to be transmitted, as for example by dividing the signal in a signal splitter, and encoding each of the plural versions of the signal to be transmitted with one of the first and second mutually orthogonal codes, which results in generation of the components of the first and second encoded signals. In this embodiment, the step of applying the first and second encoded signals to an array antenna includes the step of combining at least some of the components of the first and second encoded signals encoded with the first code with a component of the first and second encoded signals encoded with the second code, to thereby form combined coded signal components. Each of the combined coded signal components is applied to an element of the array antenna.

In another specific embodiment of the method, the step of encoding the signal to be transmitted with at least first and second mutually orthogonal codes includes the steps of replicating the signal to be transmitted to form first and second versions of the signal to be transmitted, as in the first specific embodiment. The first version of the signal to be transmitted is encoded with first code, to thereby generate first coded signal to be transmitted. The second version of the signal to be transmitted is encoded with second code, to thereby generate second coded signal to be transmitted. Plural versions of each of the first and second coded signals to be transmitted are generated. The combination of at least one of the versions of the first coded signal and one of the versions of the second coded signal are applied to at least some elements of the array antenna.

These first two methods modulate the signals for each beam with one of the mutually orthogonal waveforms, and apply the signals so modulated through individual beamformers to the antenna array.

In a third specific embodiment of the method, the step of encoding the signal to be transmitted with at least first and second mutually orthogonal codes includes the steps of (a) generating first and second sets of beam weights, and (b) using the first and second sets of beam weights, sequentially encoding the first and second beam weights with first and second mutually orthogonal codes, to thereby generate at least first and second encoded weight sets, which are the components of first and second encoded signals. In this third embodiment, the step of applying the first and second encoded signals to an array antenna includes the steps of (a) combining the components of the first and second encoded signals, to thereby form a time-sequential set of composite sets of beam weights representing time-sequential composite beams, (b)
generating plural versions of the signal to be transmitted, (c) multiplying each of the plural versions of the signal to be transmitted by one of the weights of the composite set of beam weights, to form weighted signals to be transmitted; and (d) applying the weighted signals to be transmitted to the antenna elements, for transmitting components of at least one sum and one difference beam. These components are separable by decoding at the receiver with corresponding codes.

This third embodiment allows the Hadamard coding or other orthogonal coding to be implemented with a single beamformer, and is accomplished by calculating the beamformer phase and amplitude weights which are needed to generate the two beams with mutually orthogonal modulation, and adding together those phase and amplitude weights to form a single combined set of weights. The single combined set of weights is applied to the single beamformer.

### Brief Description of the Drawing

FIGURE 1 is a simplified illustration of a spacecraft-based communication system similar to that in the prior art;
FIGURE 2 is a simplified block diagram of an array antenna according to an aspect of the invention, which may be used in the system of FIGURE 1, to provide a plurality of transmit beams for communication purposes, together with simultaneous monopulse operation in one plane;
FIGURE 3 is a simplified block diagram of a monopulse receiver according to an aspect of the invention, which extracts the sum and difference signals for the one plane;
FIGURE 4 is a simplified block and schematic diagram of another embodiment of the invention, in which two like versions or samples of the signal are applied to modulators; and
FIGURE 5 is a simplified block and schematic diagram of another embodiment of the invention, in which combined amplitude and phase weights representing the two modulated skewed antenna beams are calculated, and applied to the beamformer.

### Description of the Invention

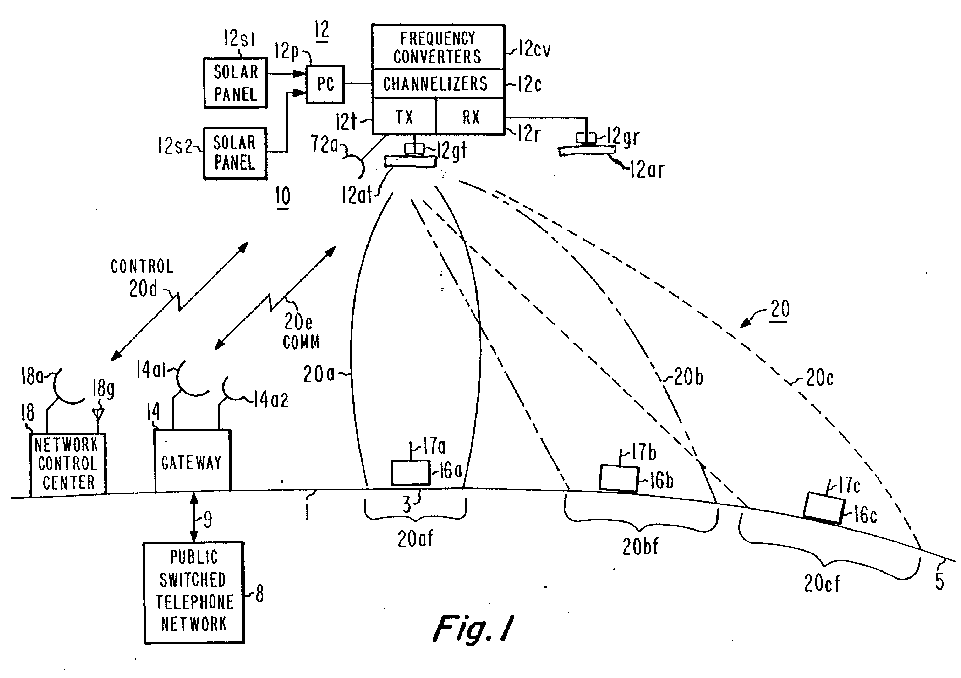

FIGURE 1 is a simplified illustration of a communication system 10, similar to that described in the abovementioned Kent et al. patent document. In system 10 of FIGURE 1, the spacecraft 12 includes a transmitter (TX) arrangement 12t, a receiver (RX) arrangement 12r, and a frequency-dependent channelizer 12c, which routes bands of frequencies from the receiver 12r to the transmitter 12t. Spacecraft 12 also includes an array of frequency converters 12cv, which convert each uplink frequency to an appropriate downlink frequency. Spacecraft 12 includes a power source which includes a solar panel (SP) illustrated as 12s, and a power converter (PC) or conditioner 12p for converting the solar array power into power suitable for powering the transmitter, receiver, and converters, and other devices on the spacecraft, such as, for example, attitude control systems. A transmitting antenna 12at mounted to the spacecraft body by a two-axis gimbal 12gt generates a plurality 20 of spot beams, one or more spot beams for each frequency band. Some of the spot beams 20a, 20b, and 20c of set 20 are illustrated by their outlines. Each antenna beam 20x (where x represents any subscript) defines a footprint on the surface 1 of the Earth below. The footprint associated with spot beam 20a is at the nadir 3 directly under the spacecraft, and is designated 20af. The footprint associated with spot beam 20c is designated 20cf, and is directed toward the horizon 5, while the footprint 20bf associated with spot beam 20b is on a location on surface 1 which lies between nadir 3 and horizon 5. It will be understood that those antenna beams, which are illustrated in "lightning bolt" form, also produce footprints. As is known to those skilled in the art, the footprints of antenna beams from a spacecraft may overlap (overlap not illustrated in FIGURE 1), to provide continuous coverage of the terrestrial region served by the antennas. Spacecraft body 12b also carries, by way of a two-axis gimbal 12gr, a receiving antenna 12ar, which produces spot beams, which are intended to be identical to those of transmitting antenna 12at.

Spacecraft 12 also includes a further transmit-receive antenna 72a, which produces a single, or possibly two or three, broad transmit beam(s) and corresponding receive beam(s), such as those designated as 20d and 20e, which are illustrated by "lightning bolt" symbols in order to simplify the drawing.

As mentioned in the Kent et al patent document, each separate antenna beam forms an infinite number of more-or-less concentric "footprints" centered about the maximum-beam-intensity point on the ground, with each being a fraction of a decibel (dB) greater than the next inner footprint. When "a" footprint is mentioned, a selected energy distribution across the "footprint" is assumed. Thus, a common assumption is that the beam intensity will not vary more than 3 dB across the footprint, which defines the extent of the footprint by the 3dB contour of the antenna beam. Similarly, overlap of the beams is taken to mean overlap at the designated beam intensity. It should further be noted that a receiving antenna also preferentially receives signals within a receiving "beam," and for a given antenna, the receiving "beam" is "dimensionally" identical to the transmitting beam, in that it has the same beamwidth and gain.

As illustrated in FIGURE 1, a group 16 of mobile terrestrial user terminals or stations includes three user terminals, denominated 16a, 16b, and 16c, each of which is illustrated as having an upstanding whip antenna 17a, 17b, and 17c, respectively. User terminal 16a lies on or within the footprint 20af, user terminal 16b lies within footprint 20bf, and user terminal 16c lies within footprint 20cf. User terminals 16a, 16b, and 16c provide communications service to users, as described below. Those skilled in the art will recognize that the illustration of a single user terminal in each footprint is only for ease of understanding, and that many such user terminals may be found in each footprint. More particularly, each illustrated user terminal 16a represents one of a plurality of user terminals which may be found within footprint 20af, and likewise illustrated user terminals 16b and 16c each represent one of a plurality of user terminals which may be found in footprints 20bf and 20cf, respectively.

FIGURE 1 also illustrates a terrestrial gateway terminal (a fixed site, tower, or station) 14, which lies in a footprint (not designated) of the (or an) antenna beam 20e. While not illustrated, it should be understood that the footprint associated with beam 20e may also contain user terminals such as 16ₓ. Gateway terminal 14 communicates with antenna 72a of spacecraft 12 by way of C-band electromagnetic signals transmitted from an antenna 14a1, and receives C-band signals from the spacecraft by way of the same antenna. Gateway terminal 14 is coupled by a data path 9 with a land-line network or public switched telephone system (PSTN) illustrated as a block 8, and provides communication between spacecraft cellular communications system 10 and the PSTN 8. While a single gateway 14 is illustrated, the system 10 may contain many gateways at spaced-apart locations, to allow the spacecraft communication system to access different PSTNs. The signals traversing antenna beam 20e represent information signals from the user terminals 16 to the gateway terminal 14, and information signals from the gateway to various ones of the user terminals. The information signals are designated generally as COMM.

A network control center (NCC) 18 is illustrated in FIGURE 1 as a terrestrial terminal lying in a footprint (not designated) of antenna beam 20d, originating from antenna 72a. The footprint may also contain user terminals (not illustrated). Network control center 18 includes an antenna 18a for communication with the spacecraft, and for communication by way of the spacecraft to the user terminals 16 and the gateway(s) 14. Network control center 18 also includes a GPS receiving antenna 18g for receiving global positioning time signals, to provide position information and an accurate time clock. Network control center 18 performs the synchronization and TDMA slot control, which the spacecraft cellular communications network requires. The functions of network control center 18 may be distributed throughout the communication system 10, but unlike the arrangement of the land-based GPS cellular communication system, in which control of the slot timing is independently set at each cell center or tower, there is only one network control center associated with the spacecraft communication system 10, for the required control of the time-division multiple access slots cannot be applied simply to one cell or antenna beam, but rather must be applied across the entire system. While network control center 18 is illustrated in FIGURE 1 as being separate from gateway 14, those skilled in the art will recognize that the network control center 18 includes functions, such as the antenna 18a, which are duplicated in the gateway 14, and that it may make economic sense to place the network control center 18, or the portions which together make up the network control center, at the site(s) of the gateway(s) such as gateway 14, so as to reduce the overall system cost by taking advantage of the redundancies to eliminate expensive subsystems.

The signals traversing antenna beam 20d between NCC 18 and spacecraft 12 of FIGURE 1 represent control signals. "Forward" control signals proceed from the NCC 18 to the remainder of the communication system 10 by way of spacecraft 12, and "reverse" or "return" control signals are those which originate at terrestrial terminals other than the NCC, and which are sent to the NCC by way of the spacecraft. Forward control signals include, for example, commands from the NCC 18 to the various user terminals 16ₓ, indicating which slot set is to be used by each user terminal for communication, while an example of a return control signal may be, for example, requests by various user terminals 16ₓ for access to the communication system 10. Other control signals are required, which are known in the art. As mentioned, those control signals flowing from NCC 18 to other portions of the communication system 18 are termed "forward" control signals, while those flowing in a retrograde direction, from the communication system 10 toward the NCC, are denominated "return" control signals.

The spacecraft 12 of FIGURE 1 may need to produce many transmitted spot beams 20 from its antennas 12at and 12ar, and the transmissions over the spot beams may require substantial electrical power, at least in part because of the relatively low gain of the simple antennas 17 of the user terminals 16. In order to reduce the power required by the transmitters in the spacecraft, the largest number of downlink frequencies, namely those used for transmissions from the spacecraft to terrestrial user terminals, are desirably within a relatively low frequency band, to take advantage of increased component efficiencies (lower component losses) at the lower frequencies. The user terminals transmit to the spacecraft at the lower frequencies, for like reasons. The transmissions to and from the spacecraft from the NCC18 and the gateway(s) 14 may be within a higher frequency band, in part because of FCC frequency allocation considerations, and in part to take advantage of high antenna gain available at the higher frequencies from large antennas at fixed installations, such as antennas 14a1 and 18a. In a specific embodiment of the invention, the uplinks and downlinks of the NCC and the gateways by way of antenna 72a may be at C-band (frequencies at about 3400 to 6700 MHz.), while the uplinks and downlinks of the user terminals by way of antennas 12at and 12ar are at L-band (frequencies at about 1500-1700 MHz). Thus, the downlink signals from transmit antenna 12at, by way of antenna beams 20a, 20b, and 20c of FIGURE 1, are at frequencies within the relatively low L-band, while the uplink and downlink signals in antenna beams 20d and 20e of antenna 72a are at the higher C-band. The uplink signals from the terrestrial user terminals at L-band travel on receive spot beams (not illustrated in FIGURE 1) of spacecraft receive antenna 12ar, which, at least in principle, correspond exactly with transmit beams 20a, 20b, and 20c. At the distances from the Earth's surface 1 at which geosynchronous spacecraft orbit, the distance between the transmit and receive antennas 12at and 12ar does not materially affect the beam correspondence, and even at low Earth orbit, is of almost no consequence.

According to an aspect of the invention, the pointing direction of the transmit antenna 12at of FIGURE 1 is determined by a monopulse method. In general, the invention relies on separately coding the sum and difference beams transmitted by an antenna, so that the received components are separable by decoding using corresponding codes. In order for the separation at the receiver to be effective, it is desirable to use mutually orthogonal codes, such as the Hadamard codes described in U.S. Patent 5,572,219, issued November 5, 1996 in the name of Silverstein et al.

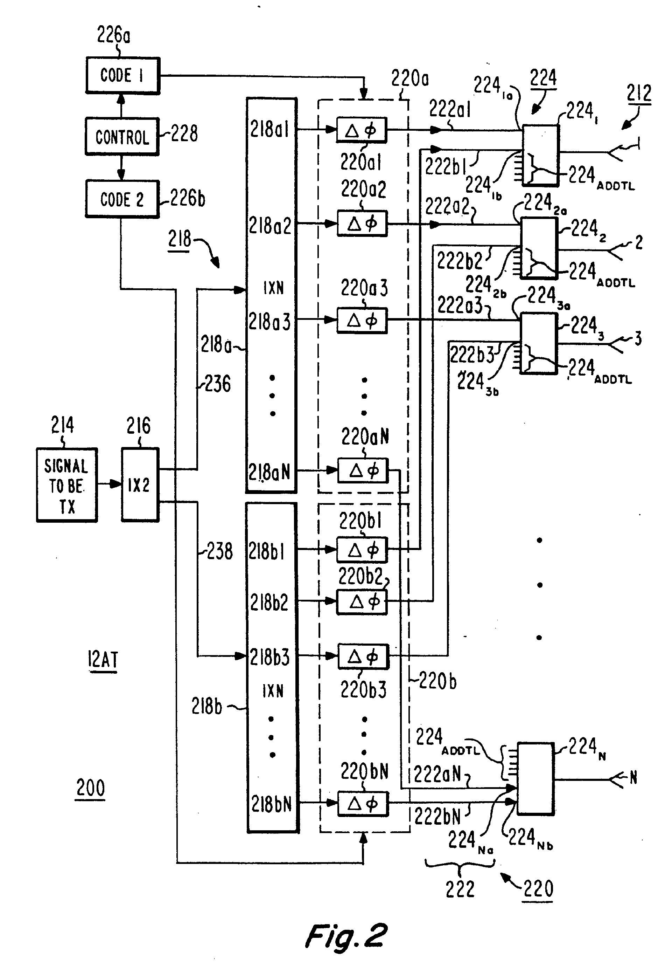

FIGURE 2 is a simplified block and schematic representation of a first embodiment of an arrangement 200 according to an aspect of the invention. In FIGURE 2, the beacon signal to be transmitted (TX) for the purpose of determination or control of the attitude of the transmit antenna 12at is generated in a block 214. This beacon signal may be as simple as a continuous-wave (CW) radio-frequency (RF) signal. Those skilled in the art know that, while initially the term RF referred to a specific range of frequencies, it has developed over time to refer to mean any alternating frequency above about 20 KHz and below light frequencies. The signal produced by generator 214 is applied to a first power divider (1X2) 216, in which the signal from generator 214 is replicated (albeit at lower power in each branch) or divided into two essentially identical portions. The two similar versions of the beacon signal are applied from power divider 216 by way of signal paths 236 and 238, respectively, to the input ports of further power dividers 218a and 218b, respectively, of a set 218 of 1XN power dividers. Each of power dividers 218a and 218b has N output ports, corresponding in number to the number of driven antenna elements 1, 2, 3, ..., N of antenna 12at. Those skilled in the art know that the number of actual radiating elements of the antenna 12at may exceed the number of driven elements, in those cases in which each driven element includes plural radiating elements. For purposes of this explanation, it is assumed that a driven element of the antenna array is a single radiator. As mentioned, each power divider 218a and 218b has N output ports, and thus there are a total of 2N drive signals at the outputs of the set 218 of dividers. The output ports of power divider 218a are denominated 218a1, 218a2, 218a3, ...218aN, and the output ports of power divider 218b are denominated 218b1, 218b2, 218b3, ..., 218bN. Each output port 218a1, 218a2, 218a3, ...218aN, 218b1, 218b2, 218b3, ..., 218bN is coupled to a corresponding one control element of a set 220 of control elements.

More particularly, output port 218a1 of power divider 218a of FIGURE 2 is coupled to a control element 220a1, output port 218a2 of power divider 218a is coupled to a control element 220a2, output port 218a3 of power divider 218a is coupled to a control element 220a3, ..., and output port 218aN of power divider 218a is coupled to a control element 220aN. Similarly, output port 218b1 of power divider 218b is coupled to a control element 220b1, output port 218b2 of power divider 218b is coupled to a control element 220b2, output port 218b3 of power divider 218a is coupled to a control element 220b3, ..., and output port 218bN of power divider 218b is coupled to a control element 220bN. As illustrated in FIGURE 2, the control elements of sets 220a and 220b are controllable phase shifters (Δϕ), but they could be, or include, variable attenuators or variable gain devices.

As illustrated in FIGURE 2, the control elements 218a1, 218a2, 218a3, ..., 218aN, 218b1, 218b2, 218b3, ..., 218bN of set 220 are separately grouped into subsets 220a and 220b. The control elements 218a1, 218a2, 218a3, ..., 218aN of subset 220a are controlled simultaneously by a code signal from a code 1 generator 226a, while the control elements 218b1, 218b2, 218b3,. .., 218bN of subset 220b are controlled simultaneously by a second code signal from a code 2 generator 226b. Codes 1 and 2 produced by code generators 226a and 226b, respectively, are mutually orthogonal codes. Orthogonality, for this purpose, means that the encoded signals can be transmitted simultaneously through a signal path, and the original signals can be reconstituted at the output of the signal path by decoding the composite received signal separately with corresponding codes. In a preferred embodiment of the invention, the codes are Hadamard codes, corresponding to those disclosed in the Hadamard codes described in the abovementioned U.S. Silverstein et al. patent, and in U.S. Patent applications 09/352,508 and 09/352,509, filed July 12, 1999. Since the codes must be maintained in synchronism for best separability, a controller illustrated as a block 228 is provided.

In the arrangement of FIGURE 2, the amplitude- or phase-shifted coded versions of the beacon signal appearing at the outputs of the various control elements 218a1, 218a2, 218a3, ..., 218aN, 218b1, 218b2, 218b3, ..., 218bN of set 220 are applied to certain input ports of the beamformers 224₁, 224₂, 224₃, ..., 224_{N} of set 224 of beamformers. More particularly, the amplitude- or phase-shifted output of control element 220a1, encoded with code 1, is applied by way of a signal path 222a1 to an input port 224₁ₐ of beamformer 224₁, and the amplitude- or phase-shifted output of control element 220b1, encoded by code 2, is applied by way of a signal path 222b1 to an input port 224_{1b}. The amplitude- or phase-shifted output of control element 220a2, encoded with code 1, is applied by way of a signal path 222a2 to an input port 224₂ₐ of beamformer 224₂, and the amplitude- or phase-shifted output of control element 220b1, encoded by code 2, is applied by way of a signal path 222b2 to an input port 224_{2b} of beamformer 224₂. Similarly, the amplitude- or phase-shifted output of control element 220a3, encoded with code 1, is applied by way of a signal path 222a3 to an input port 224₃ₐ of beamformer 224₃, and the amplitude- or phase-shifted output of control element 220b3, encoded by code 2, is applied by way of a signal path 222b3 to an input port 224_{3b} of beamformer 224₃. Other amplitude- or phase-shifters (not illustrated) are similarly connected to the various beamformers. For completeness, the amplitude- or phase-shifted output of control element 220aN, encoded with code 1, is applied by way of a signal path 222aN to an input port 224_{Na} of beamformer 224_{N}, and the amplitude- or phase-shifted output of control element 220bN, encoded by code 2, is applied by way of a signal path 222bN to an input port 224_{3N} of beamformer 224_{N}.

In addition to the two beacon signals originating from source 214 of FIGURE 2, and encoded with mutually orthogonal codes 1 and 2, which are applied to the 224xa and 224xb (where X represents the set of all numbers ranging from 1 to N) ports of the beamformers of set 224 of beamformers, information signals may be applied to sets of additional input ports of the beamformers, designated in FIGURE 2 generally as 224_{addtl}. A separate antenna beam, directed in conformance with the settings of the phase shifters (not illustrated) associated therewith, is formed for each set of N signals applied to a ports of ports 224_{addtl} of set 224 of beamformers.

Those skilled in the art will understand that the signals having various phase shifts applied to the N input ports of the beamformers of set 224 of FIGURE 2 produce a beam in a given direction, and the signals having other phase shifts applied to the N input ports of the beamformers of set 224 produce a beam in some other direction. Thus, different phase settings of the various pair combinations applied to the 224xa and 224xb inputs of the beamformers of set 224 will produce a pair of skew beams, each encoded with one of code 1 and code 2. The two beams, as transmitted from array 212, will overlap to some degree over a broad spatial angle, and, in the overlap region, a composite beam is transmitted, consisting of beacon signal originating from source 214, partially encoded by code 1, and partially by code 2. It should be further noted that the information signals also produce various beams, which overlap with each other and with the two beacon beams, described above (in the usual system, there will be three beacon signals, to provide a sum beam and difference beams in both the vertical and horizontal directions). However, the information signals will be mutually separable and separable from the beacon signals by virtue of frequency or time division multiplex; that is to say that the signals on those beams which substantially overlap will be at different frequencies, or occupy different time slots. Those information signals on individual antenna beams, which do not substantially overlap, do not interfere anyway, so there is no need for frequency or time separation. However, the beacon signals are on (or at) the same frequency, and occur simultaneously, so they form a composite beam which, but for the orthogonal coding, would not be separable from each other.

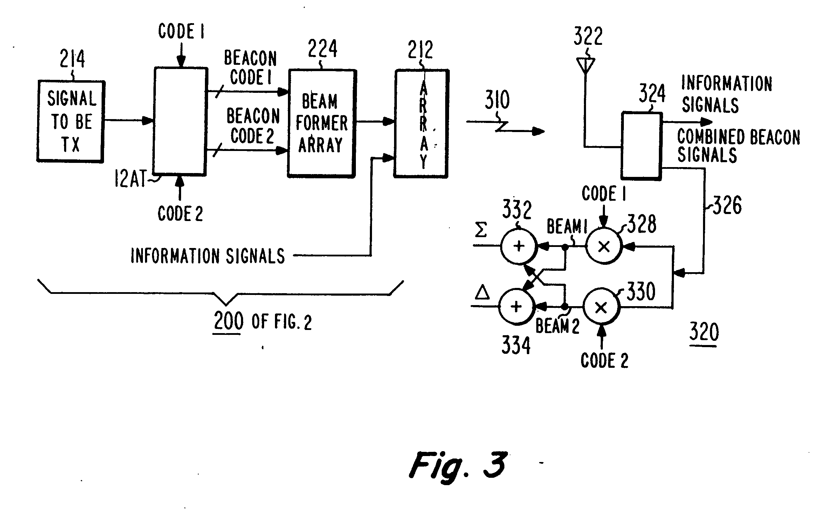

In FIGURE 3, arrangement 200 of FIGURE 2 is illustrated in further simplified form, and is illustrated as generating a composite beam 310 illustrated by an arrow symbol. A receiving arrangement 320 includes a probe antenna 322, which receives at least the composite beacon signal, and applies it to a separation arrangement 324, if needed, to separate the information signals from the composite beacon signal. The separation may be accomplished in separation arrangement 324 by frequency or time separation, or both, as appropriate. The information signals are routed by a path 326 to a utilization arrangement, if appropriate. The combined beacon signals are applied over a signal path 326 to a pair of multipliers 328, 330, to which are applied code 1 and code 2, respectively. The product from multiplier 328 represents the first beam, and the product from multiplier 330 represents the second beam, skewed from the first beam. The two beam-representative signals are applied to the input ports of a summing (+) circuit 332 and a differencing (-) circuit 334. Summing circuit 332 produces the desired sum (Σ) signal, and the differencing circuit 334 produces the difference (Δ) signal. Thus, monopulse operation can be achieved "from" the transmit antenna array 212.

It is worth noting that, while control of the phase shifters of set 220 of controllers or amplitude or phase shifters of FIGURE 1 is described as being only by the codes, additional control may be provided for the purpose of adjusting the controllers to redirect the beams which they control. Thus, the controllers of set 220a may be adjusted to direct beam 1 in the desired direction or to control its beam characteristics, independently of the control of beam 2, which is controlled by the controllers of set 220b. The codes, in any case, are bilevel (logic 1,0; high,low, or the like), which toggle the controllers from one state to another. In the case of phase-shift controllers, the phase responsive to a logic 1 may be unaltered, and may be toggled by 180i in response to a logic 0 in the code. In the case of an amplitude controller, the amplitude may be, for example, unity or 0 dB for a logic 1, and -10 dB for a logic 0.

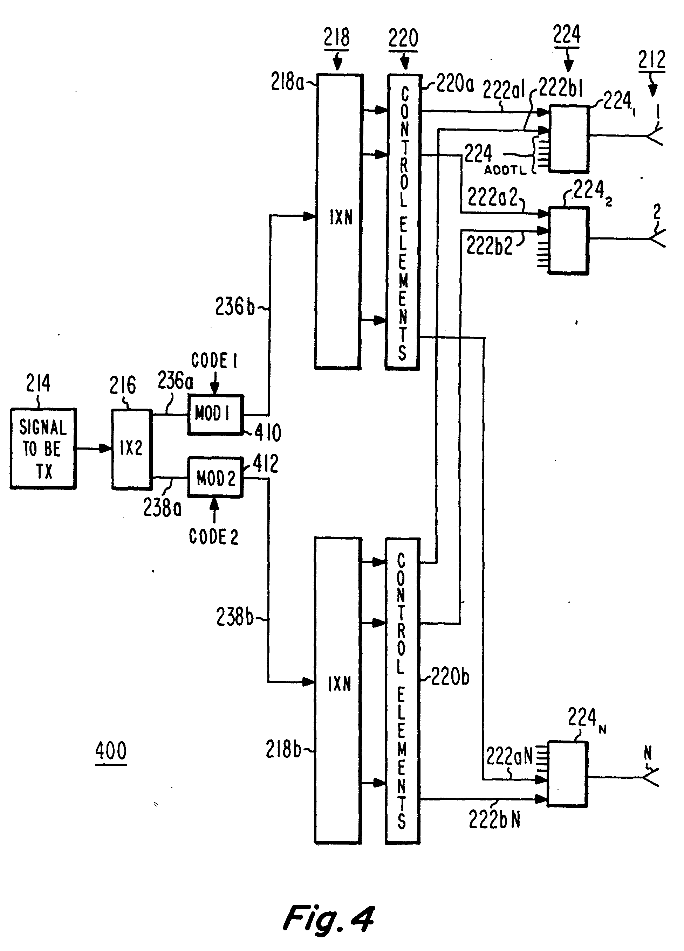

FIGURE 4 is a simplified block and schematic diagram of another embodiment of the invention. In FIGURE 4, elements corresponding to those of FIGURE 2 are designated by like reference numerals. In FIGURE 4, the orthogonal codes are not applied to the subsets 220a, 220b of control elements of set 220 of control elements. Instead, the two like versions or samples of the beacon signal appearing at the output ports of power divider 216 are applied to modulators. For this purpose, the signal paths 236 and 238 of FIGURE 2 are broken into two portions, so that path 236 is broken into two portions 236a and 236b, and path 238 is broken into portions 238a and 238b. In FIGURE 4, a first modulator 410 is placed between signal path portions 236a and 236b, and a second modulator 412 is placed between signal path portions 238a and 238b. Those skilled in the art of electricity and systems know that the term "between" has a meaning which is different than the physical meaning, and refers instead to its relation to the flow of current or signal, respectively. In the present context, modulator 410 processes signal leaving power splitter or divider 216 and progressing to 1XN divider 218a, and modulator 412 processes signal leaving power divider 216 and progressing to 1XN divider 218b. Code 1 is applied to modulator 410, and code 2 is applied to modulator 412. Thus the beacon signal samples are encoded with the mutually orthogonal codes 1 and 2 before application to the dividers of set 218 and the controllers of set 220, and no codes are applied in the control elements of set 220. The operation of the system is otherwise the same as that described in conjunction with FIGURE 2, and the transmitted composite signal is the same as that produced by the arrangement of FIGURE 2. Consequently, the composite beams associated with the beacon signal produced in the arrangement of FIGURE 4 are separable by the same receiver structure described in conjunction with FIGURE 3.

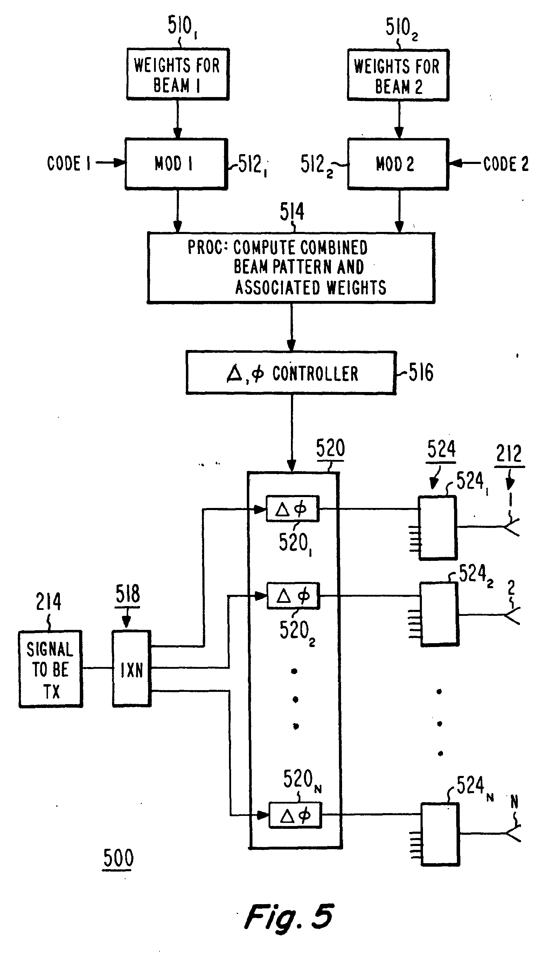

Yet another embodiment of the invention applies the orthogonal codes to the computed amplitude and phase weights for the two mutually skewed beacon antenna beams, and computes the combined beam pattern resulting from the combination of the coded weights, and finally determines the amplitude and phase weights which are required to produce the combined beam pattern so determined. The amplitude and phase weights, so determined, are applied to the controllers for generating the desired beams. FIGURE 5 illustrates such a system. In FIGURE 5, a source 214 of beacon signal to be transmitted generates signal, which is applied to a 1XN divider or splitter 518. The various output signals from 1XN 518 are applied to a controller designated generally as 520, which contains N separate controllers, illustrated as phase andor amplitude controllers (Δϕ) 520₁, 520₂, ..., 520_{N}. The controlled output signals from controllers 520₁, 520₂, ..., 520_{N} of set 520 are applied to a particular input port of a set 524 of beamformers. For example, the output of controller 520₁ is applied to the first (upper) port of a beamformer 524₁, the output of controller 520₂ is applied to the first (upper) port of a beamformer 524₂, ..., and the output of controller 520_{N} is applied to the first (upper) port of a beamformer 524_{N}. The other input ports of the beamformers of set 524 receive information signals. Each beamformer of set 524 of beamformers drives a corresponding antenna element of set 212. In particular, controller 524₁ drives antenna element 1, controller 524₂ drives antenna element 2, ..., and controller 524_{N} drives antenna element N. Note that, in this arrangement, only one input port (the first or upper port) of the beamformers is used to generate the composite beacon signal.

Also in FIGURE 5, the controller weights for the first skew antenna beam are calculated or stored in a block 510₁, and the controller weights for the second skew antenna beam are calculated or stored in a block 510₂. A first modulator 512₁ modulates the first-beam weights with the first code, and a second modulator 512₂ modulates the second-beam weights with the second code, orthogonal to the first. The coded weights for the two separate beams are applied to a processor 514, which determines the radiation pattern of the combined, coded beams, and also determines the weights required to effect the composite, coded pattern. The weights as determined in block 514 are applied by way of a driver 516 to controller set 520, for controlling the individual control elements or controllers. In operation, the composite beam drive is applied to the single ports of the set 524 of beamformers, and the two skew beacon beams are simultaneously generated as in the arrangements of FIGURES 2 and 4. The receiver of FIGURE 3 is again useful for determining the sum and difference monopulse values in respect of FIGURE 5.

Other embodiments of the invention will be apparent to those skilled in the art. For example, while difference beams or signals have been described for only a single plane or direction of control, those skilled in the art will understand that control in two mutually orthogonal directions ("vertical" and "horizontal," for example) requires only the addition of equipments, such as beamformers, for the orthogonal direction; the two directions or planes of control are independent, and may be treated separately. Those skilled in the art also know that the terms "squinted beams" or "skewed beams" could include shaped beams as well as pencil or spot beams. While the invention is best performed with all the beams transmitted on the same frequency, the frequencies may differ, so long as the phase changes are small over the duration of interest.

In general, a method according to the invention, for generating at least sum and difference antenna beams, includes the steps of generating (214) a signal to be transmitted, which may be a continuous-wave (CW) radio-frequency (RF) signal, and encoding the signal to be transmitted with at least first and second mutually orthogonal codes (226a, 226b), to thereby generate at least components of first and second encoded signals. The orthogonal codes may be Hadamard codes. In the general method, the next step is to apply the first (226a) and second (226b) encoded signals to an array antenna (12at), for transmitting components of at least two mutually skewed beams, which in an example may be one sum and one difference beam. These components are separable at a receiver (320) by decoding the received signal with codes corresponding to the first and second mutually orthogonal codes.

In a first specific embodiment (200) of the method, the step of encoding the signal to be transmitted includes the steps of generating plural versions of the signal to be transmitted, as for example by dividing the signal in a signal splitter (216), and
encoding each of the plural versions of the signal to be transmitted with one of the first and second mutually orthogonal codes, which results in generation of the components of the first and second encoded signals. In this embodiment (200), the step of applying the first and second encoded signals to an array antenna includes the step of combining (in beamformers 224) at least some of the components of the first and second encoded signals encoded with the first code with a component of the first and second encoded signals encoded with the second code, to thereby form combined coded signal components. Each of the combined coded signal components is applied to an element (1, 2, 3, ...N) of the array antenna (212).

In another specific embodiment (400) of the method, the step of encoding the signal to be transmitted with at least first and second mutually orthogonal codes includes the steps of replicating (in divider 216) the signal to be transmitted to form first and second versions of the signal to be transmitted, as in the first specific embodiment. The first version of the signal to be transmitted (on path 236a) is encoded with the first code, to thereby generate (on path 236b) first coded signal to be transmitted. The second version of the signal to be transmitted (on path 238a) is encoded with second code, to thereby generate (on path 238b) second coded signal to be transmitted. Plural versions of each of the first and second coded signals to be transmitted are generated (218a, 218b). The combination of at least one of the versions of the first coded signal (on path 222a1, for example) and one of the versions of the second coded signal (on path 222b1, for example) are applied (by way of a beamformer of set 224) to at least some elements (element 1, for example) of the array antenna (212).

In a third specific embodiment (500) of the method, the step of encoding the signal to be transmitted with at least first and second mutually orthogonal codes includes the steps of (a) generating first (510₁) and second (510₂) sets of beam weights, and (b) using the first and second sets of beam weights, sequentially encoding (512_{1,2}) the first and second beam weights with first (code 1) and second (code 2) mutually orthogonal codes, to thereby generate at least first and second encoded weight sets, which are the components of first and second encoded signals. In this third embodiment (500), the step of applying the first and second encoded signals to an array antenna includes the steps of (a) combining (514) the components of the first and second encoded signals, to thereby form a time-sequential set of composite sets of beam weights representing time-sequential composite beams, (b) generating (518) plural versions of the signal to be transmitted, (c) multiplying (520₁, 520₂, ..., 520_{N}) each of the plural versions of the signal to be transmitted by one of the weights of the composite set of beam weights, to form weighted signals to be transmitted; and (d) applying (by way of the beamformers) the weighted signals to be transmitted to the antenna elements, for transmitting (combined) components of at least one sum and one difference beam. These components are separable by decoding at the receiver with corresponding codes.

## Claims

1. A method for generating at least sum and difference antenna beams, said method comprising the steps of:
generating a signal to be transmitted:
encoding said signal to be transmitted with at least first and second mutually orthogonal codes, to thereby generate at least components of first and second encoded signals; and
applying said first and second encoded signals to an array antenna, for transmitting components of at least two mutually skewed beams, which components are separable by decoding with codes corresponding to said first and second mutually orthogonal codes.

2. A method according to claim 1, wherein said step of applying said first and second encoded signals to an array antenna, for transmitting components of at least two mutually skewed beams, includes the step of applying said first and second encoded signals to an array antenna, for transmitting components of at least one sum and one difference beam.

3. A method according to claim 1, wherein said step of encoding said signal to be transmitted includes the steps of:
generating plural versions of said signal to be transmitted; and
encoding each of said plural versions of said signal to be transmitted with one of said first and second mutually orthogonal codes, to thereby generate components of said first and second encoded signals.

4. A method according to claim 3, wherein said step of applying said first and second encoded signals to an array antenna includes the step of:
combining at least some of said components of said first and second encoded signals encoded with said first code with a component of said first and second encoded signals encoded with said second code, to thereby form combined coded signal components; and
applying each of said combined coded signal components to an element of said array antenna.

5. A method according to claim 1, wherein said step of encoding said signal to be transmitted with at least first and second mutually orthogonal codes comprises the steps of:
replicating said signal to be transmitted to form first and second versions of said signal to be transmitted;
encoding said first version of said signal to be transmitted with said first code to generate first coded signal to be transmitted;
encoding said second version of said signal to be transmitted with said second code to generate second coded signal to be transmitted;
generating plural versions of each of said first and second coded signals to be transmitted; and
applying to at least some elements of said array antenna the combination of at least one of said versions of said first coded signal and one of said versions of said second coded signal.

6. A method according to claim 1, wherein:
said step of encoding said signal to be transmitted with at least first and second mutually orthogonal codes, includes the steps of
(a) generating first and second sets of beam weights;
(b) using said first and second sets of beam weights, sequentially encoding said first and second beam weights with first and second mutually orthogonal codes, to thereby generate at least first and second encoded weight sets, which are said components of first and second encoded signals; and
said step of applying said first and second encoded signals to an array antenna includes the steps of
(a) combining said components of said first and second encoded signals, to thereby form a time-sequential set of composite sets of beam weights representing time-sequential composite beams;
(b) generating plural versions of said signal to be transmitted;
(c) multiplying each of said plural versions of said signal to be transmitted by one of said weights of said composite set of beam weights, to form weighted signals to be transmitted; and
(d) applying said weighted signals to be transmitted to said antenna elements, for transmitting components of at least one sum and one difference beam, which components are separable by decoding with corresponding codes.

7. A method for generating at least sum and difference antenna beams, said method comprising the steps of:
generating two separate versions of a signal to be transmitted:
encoding each of said separate versions of said signal with first and second mutually orthogonal codes, to thereby generate first and second encoded signals, respectively:
applying said first encoded signal to a sum port of a beamformer of an array antenna, for thereby generating a sum beam; and
applying said second encoded signal to a difference port of said beamformer of said array antenna, for thereby generating a difference beam occurring simultaneously with said sum beam, whereby a combined beam is transmitted, and whereby said signal in said sum beam may be separated from said combined beams by decoding with said first orthogonal code, and said difference beam may be separated from said combined beam by decoding with said second orthogonal code.

8. A method according to claim 7, further comprising the steps of:
generating a further version of said signal to be transmitted:
encoding said further version of said signal to be transmitted with a third code, orthogonal to said first and second codes, to thereby generate a third encoded signal;
applying said third encoded signal to a further difference port of said beamformer of said array antenna, for thereby generating a second difference beam simultaneously with said sum beam and in a differ4nt spatial plane, whereby said combined beam as transmitted includes said second difference beam, and whereby said second difference beam may be separated from other beams of said antenna by decoding with said third code.

9. A method according to claim 7, wherein said step of generating a sum and a difference beam includes the steps of generating first and second mutually skewed beams, and subtracting said second beam from said first beam.

10. A method according to claim 7, wherein said step of generating a difference beam includes the steps of generating a second beam phased so as to generate a null on the axis of said sum beam.
